# EUROPEAN PATENT APPLICATION

(11) **EP 2 927 106 A1**
(43) Date of publication of application: **07.10.2015**
(21) Application number: 14182745.1
(22) Date of filing: 29.08.2014
(51) Int. Cl.: B62K 15/00, B62K 21/12, B62K 21/02

(54) **Foldable bicycle and method of folding the same**

(30) Priority: 02.04.2014 KR 20140039490; 02.04.2014 KR 20140039491
(71) Applicant: AMECO CO., LTD., Seongsan-gu Changwon-si, Gyeongsangnam-do 642-315 (KR)
(72) Inventor: Kim, Hong Jin, 446-916 Gimpo-si, Gyeonggi-do (KR)
(74) Representative: Gulde & Partner

(57) **Abstract**

Disclosed are a foldable bicycle and a method of folding the same, which includes (a) releasing a locking state of a locking part which locks rotation operations of front and rear wheel frame parts, (b) rotating up and down the front and rear wheel frame parts about a hinge coupling part interposed between the front and rear wheel frame parts, and (c) folding the front and rear wheel frame parts to be overlapped with each other by crossing each other. The foldable bicycle is folded by rotating up and down the front and rear wheel frames about the hinge coupling part provided at the central portion of the bicycle, so that the volume of the bicycle is minimized.

## Description

### BACKGROUND OF THE INVENTION

### 1. Field of the Invention

The present invention relates to a foldable bicycle and a method of folding the same, and more particularly to a foldable bicycle, which can be folded through an up and down rotation operation about a rotational shaft provided at the central portion of a frame, and a method of folding the same.

### 2. Description of the Related Art

A bicycle, which is one of a moving unit for a short distance, has been extensively used for exercise or hobby.

In general, the bicycle includes a frame constituting a framework of the bicycle, and wheels, pedals, handles, and a saddle mounted on the frame.

As the bicycle has an integral-type frame, a user feels inconvenient when storing and carrying the bicycle.

Recently, in order to solve the problem, the bicycle having a structure, in which the frame is foldable, has been developed.

For example, following patent document 1 (Korean Patent Registration No. 10-1139065 issued on April 30, 2012) and patent document 2 (Korean Unexamined Utility Model Publication No. 20-2013-0002283 published on April 15, 2013) disclose the structures of foldable bicycles.

The patent document 1 discloses a frame structure of a foldable bicycle having first to fourth joint points provided at a head tube, a seat support part, and down tubes, so that the bicycle can be folded on a flat surface

The patent document 2 discloses a foldable bicycle including a front frame, a main frame, and a rear frame, in which front and rear pivot rods provided in the main frame are coupled to each other rotatably about a coupling device provided at the center of the main frame, so that the main frame, the front frame, and the rear frame are foldable.

Meanwhile, an applicant of the subject application has an experience of disclosing a foldable bicycle including rear and main frames having hinge coupling parts to fold rear and front wheels by overlapping the rear and front wheels, which is applied and registered in Korean Intellectual Property Office.

However, as the foldable bicycles according to related arts including patent documents 1 and 2 have structures in which frames are folded on a flat surface, the foldable bicycles have at least two joint points and pivot rods.

Therefore, in the foldable bicycle according to the related art, as a structure of folding the frames is complicated, the folding operation is complicated and difficult. In addition, as the number of parts is increased, the manufacturing cost of the foldable bicycle may be increased.

Therefore, patent document 3 (Korean Patent Registration No. 10-1143613 issued on May 11, 2012) discloses main and rear wheel frames rotated up and down about a hinge coupling part serving as one joint point so that rear and front wheels are overlapped with each other, thereby simplifying a folding structure.

However, according to the patent document 3, the main frame is formed for the mounting of a front wheel, a pedal, and a saddle, and a rear wheel fork is rotatably coupled to a rear portion of the main frame. Accordingly, there is a limitation in minimizing the volume of the bicycle in a folded state due to the length of the main frame.

### SUMMARY OF THE INVENTION

The present invention is made keeping in mind the problems occurring in the related art, and an object of the present invention is to provide a foldable bicycle having a minimized volume in a folded state by providing a hinge coupling part at the central portion of a frame, and a method of folding the same.

Another object of the present invention is to provide a foldable bicycle, which can be folded as a central portion is rotated up or down so that front and rear wheels are overlapped with each other by crossing each other, and a method of folding the same.

Still another object of the present invention is to provide a foldable bicycle, which can prevent the stiffness of a frame from being degraded due to a hinge coupling part provided at the central portion of the frame, and a method of folding the same.

In order to accomplish the above objects, according to one aspect of the present invention, there is provided a foldable bicycle including a front wheel frame part in which a front wheel and a handle are mounted, a rear wheel frame part in which a rear wheel and a driving module are mounted, and a hinge coupling part to couple the front wheel frame part to the rear wheel frame part rotatably up and down the front wheel and the rear wheel such that the front and rear wheels are overlapped with each other by crossing each other. The front wheel frame part and the rear wheel frame part have equal or approximate lengths such that the hinge coupling part is provided at a central of the foldable bicycle or a whole frame.

The hinge coupling part includes a first flange coupled to a rear end portion of the front wheel frame part, a second flange coupled to a front end portion of the rear wheel frame part, and a rotational shaft inclined to one side at a preset angle from a central line of front and rear wheel frames, passing through the first and second flanges, and coupled to the first and second flanges. The front and rear wheel frame parts are rotated about the rotational shaft in a folding operation such that the front and rear wheel frame parts are overlapped with each other by crossing each other.

The foldable bicycle further includes a locking part to lock or release a rotation operation of the front and rear wheel frame parts about the hinge coupling part. The locking part includes a locking lever coupled to a rear end portion of the front wheel frame part such that the locking lever is hinge-rotated, and a locking member mounted on a bottom surface of the locking lever such that the locking member is hinge-rotated, and inserted into an insertion groove formed in a front end portion of the rear wheel frame part.

The front wheel frame part includes a front wheel frame constituting a front end portion of amain frame of the foldable bicycle, a front wheel fork in which a front wheel is mounted, and a coupling tube to couple the front wheel fork to a front end portion of the front wheel frame. The front wheel fork is mounted only at one side of the front wheel to prevent interference with the rear wheel frame part in a folding operation.

The foldable bicycle further includes a coupling part rotatably hinged between an upper end portion of the coupling tube and a handle frame having an upper portion coupled to the handle such that the handle frame is folded when the foldable bicycle is folded. The coupling part includes a first coupling flange provided at the upper end portion of the coupling tube, and a second coupling flange provided at a lower end portion of the handle frame. A locking unit is mounted in the coupling part to lock or release a folding operation of the handle frame, the locking unit comprises a hinge shaft passing through the first and second coupling flanges of the coupling part and coupled to the first and second coupling flanges and a lever coupled to one end portion of the hinge shaft, and the coupling part and the hinge shaft are inclined to one side at a preset angle such that the coupling part and the hinge shaft are inclined.

The hinge shaft is provided at a central portion thereof with an eccentric member eccentrically mounted. The locking unit further includes a coupling member to reciprocate back and forth by the eccentric member, and a fixing member coupled to a front end portion of the coupling member to fix first and secondprotrusionparts, which protrude from an upper end portion of a coupling rod mounted in the coupling tube and a lower end portion of the handle frame, respectively, in contact with each other, or to separate the first and second protrusion parts from each other.

The rear wheel frame part includes a rear wheel frame constituting a rear end portion of the main frame of the foldable bicycle, and a housing coupled to a lower end portion of the rear wheel frame and having the driving module and the rear wheel mounted therein. A coupling protrusion and a coupling groove coupled to the coupling protrusion are provided on a rear end surface of the front wheel frame part and a front end surface of the rear wheel frame part, respectively.

According to another aspect of the present invention, there is provided a method of folding a foldable bicycle. The method includes (a) releasing a locking state of a locking part which locks rotation operations of front and rear wheel frame parts, (b) rotating up and down the front and rear wheel frame parts about a hinge coupling part interposed between the front and rear wheel frame parts, and (c) folding the front and rear wheel frame parts to be overlapped with each other by crossing each other.

Step (b) includes rotating the front and rear wheel frame parts about a rotational shaft inclined at a preset angle from a central line of the front and rear wheel frame parts.

Step (c) includes fixedly overlapping front and rear wheels with each other by a fixing unit.

The method further includes (d) releasing a locking state of a handle frame coupled to the front wheel frame part, and (e) folding the handle frame by rotating the handle frame to one side of a front wheel fork of the front wheel frame part.

Step (d) includes releasing the locking state of the handle frame by separating first and second protrusion parts, which are formed on the front wheel frame part and the handle frame, from each other as a locking unit interposed between the front wheel frame part and the handle frame is rotated to one side.

As described above, in the foldable bicycle and the method of folding the same according to the present invention, the volume of the foldable bicycle can be minimized by rotating up and down the front and rear wheel frames about the hinge coupling part at the central portion of the bicycle.

In addition, according to the present invention, the rotational shaft of the hinge coupling part is inclined to one side, so that the front and rear wheels are overlapped with each other by crossing each other to be folded. In addition, the foldable bicycle in the folded state can be easily carried on stairs or in a narrow space.

In addition, according to the present invention, the coupling protrusion and the coupling groove are provided in the front and rear wheel frames, respectively, thereby preventing stiffness from being degraded at the central portion of the main frame.

Further, according to the present invention, the front and rear wheel frames are overlapped with each other through one manipulation of rotating the locking lever so that the bicycle is folded. When the bicycle is stored, the handle frame is folded to the front wheel fork, so that the volume of the foldable bicycle can be minimized. Accordingly, the storage property and the portability of the bicycle can be improved.

### DETAILED DESCRIPTION OF THE INVENTION

FIG. 1 is a side view showing a foldable bicycle according to an exemplary embodiment of the present invention.
FIG. 2 is an enlarged view partially showing a front wheel frame part and a handle frame shown in FIG. 1.
FIG. 3 is an exploded perspective view showing the front wheel frame part and the handle frame shown in FIG. 2.
FIG. 4 is a bottom view showing the foldable bicycle shown in FIG. 1.
FIG. 5 is a sectional view showing a hinge coupling part shown in FIG. 4.
FIG. 6 is a flowchart to explain a method of folding the foldable bicycle according to an exemplary embodiment of the present invention step by step.
FIGS. 7 and 8 are views to explain the folding operation of the foldable bicycle.

### DETAILED DESCRIPTION OF THE INVENTION

Hereinafter, a foldable bicycle according to an exemplary embodiment of the present invention and a method of folding the same will be described with reference to accompanying drawings.

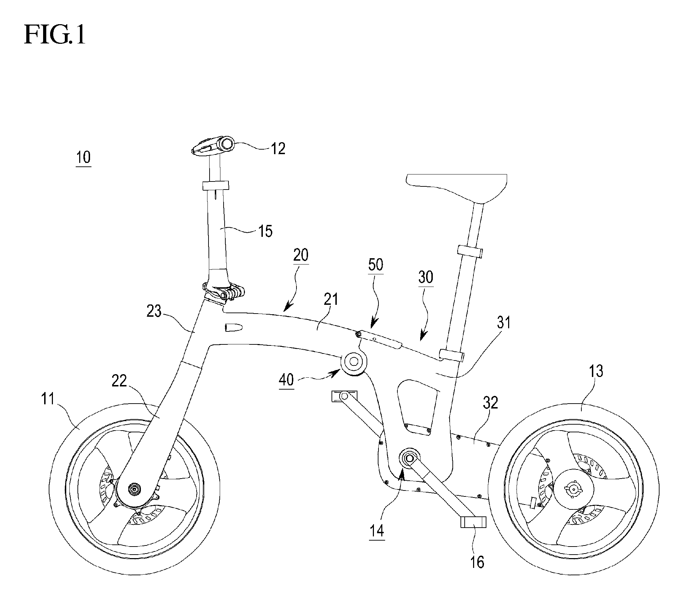

FIG. 1 is a side view showing a foldable bicycle according to an exemplary embodiment of the present invention.

As shown in FIG. 1, a foldable bicycle 10 according to an exemplary embodiment of the present invention includes a front wheel frame part 20 having a front wheel 11 and a handle 12 mounted therein, a rear wheel frame part 30 having a rear wheel 13 and a driving module 14 mounted therein, and a hinge coupling part 40 to couple the front wheel frame part 20 to the rear wheel frame part 30 rotatably up and down the front wheel 11 and the rear wheel 13 such that the front and rear wheels 11 and 13 are overlapped with each other by crossing each other.

The front wheel frame part 20 and the rear wheel frame part 30 may have equal or approximate lengths so that the hinge coupling part 40 is provided at the central portion of a bicycle or a whole frame.

Therefore, according to the present invention, the front wheel frame part 20 and the rear wheel frame part 30 are folded about the hinge coupling part 40, so that the whole volume of the bicycle 10 in the folded state can be minimized.

In detail, the front wheel frame part 20 may mainly include a front wheel frame 21 constituting a front end portion of a main frame of the foldable bicycle 10, a front wheel fork 22 in which the front wheel 11 is mounted, and a coupling tube 23 to couple the front wheel fork 22 to a front end portion of the front wheel frame 21.

The front wheel frame 21 may be manufactured by using a pipe having a substantially quadrangular-shape sectional surface or a substantially cylindrical-shape sectional surface.

The front fork 22 may be formed in the shape of one bar having a curved central portion so that the front fork 22 is mounted only at one side of the front wheel 11 in order to prevent the interference with the rear wheel frame part 30 when the front wheel frame part 20 and the rear wheel frame part 30 are folded.

The coupling tube 23 is provided in the form of a pipe having a substantially cylinder-shape sectional surface, and a coupling part 24 may be rotatably hinged between an upper end portion of the coupling tube 23 and a handle frame 15 having an upper portion coupled to the handle 12 so that the handle frame 15 is foldable when the bicycle 10 is folded.

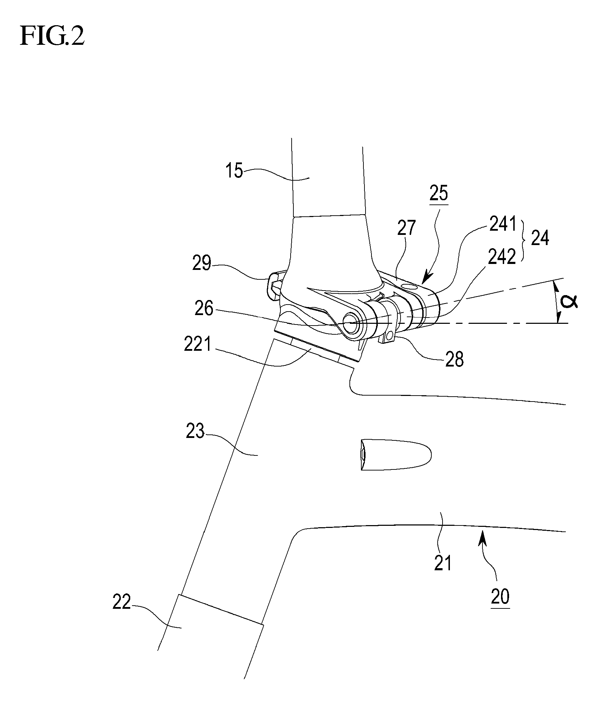

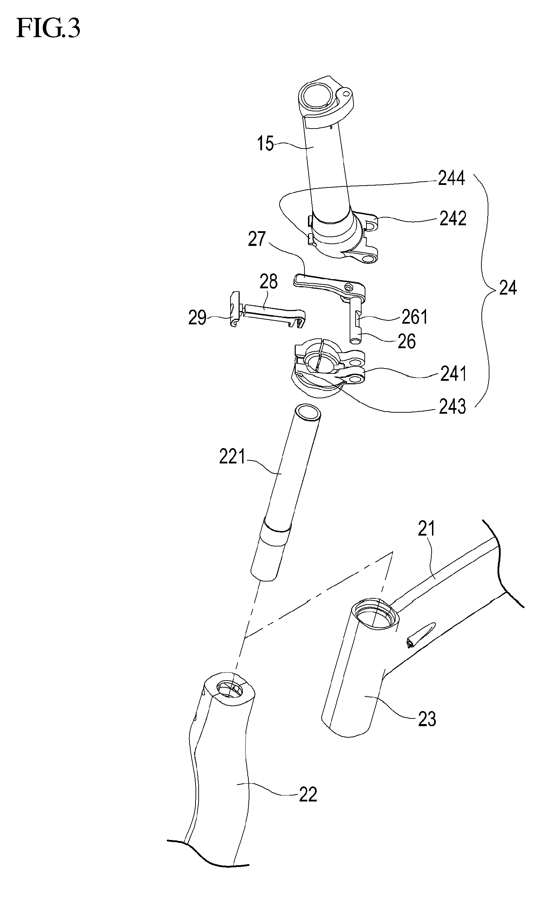

For example, FIG. 2 is a partially enlarged view showing the front wheel frame part and the handle frame shown in FIG. 2, and FIG. 3 is an exploded perspective view showing the front wheel frame part and the handle frame shown in FIG. 3.

As shown in FIGS. 2 and 3, the coupling part 24 may include a first coupling flange 241 provided at the upper end portion of the coupling tube 23 and a second coupling flange 242 provided at a lower end portion of the handle frame 15, and a locking unit 25 may be mounted in the coupling part 24 to lock or release the folding operation of the handle frame 15.

The locking unit 25 may include a hinge shaft 26 coupled to the first and second coupling flanges 241 and 242 of the coupling part 24 while passing through the first and second coupling flanges 241 and 242 and a lever 27 coupled to one end portion of the hinge shaft 26.

For example, the locking unit 25 may be prepared as a quick release lever (QR lever) to maintain the handle frame 15 in a fixed state if the lever 27 is rotated to one side, and to release the fixed state of the handle frame 15 if the lever 27 is hingedly rotated to the other side, so that the folding operation of the handle frame 15 is possible.

To this end, the hinge shaft 26 may be provided at the central portion thereof with an eccentric member 261 eccentrically mounted, and a coupling member 28 may be coupled to the eccentric member 261 to reciprocate back and forth by the eccentric member 261 when the hinge shaft 26 rotates.

The coupling member 28 maybe provided in the form of a quadrangular bar having a substantially quadrangular sectional surface.

In this case, a coupling rod 221 may be mounted in the coupling tube 23 and coupled to an upper end portion of the front wheel fork 22.

A fixing member 29 may be coupled to a front end portion of the coupling member 28 coupled to first and second protrusion parts 243 and 244 protruding from both of an upper end portion of the coupling rod 221 mounted in the coupling tube 23 and a lower end portion of the handle frame 15, respectively.

If the eccentric member 261 is rotated toward a rear end portion of the hinge shaft 26, the fixing member 29 performs a locking operation so that the first and second protrusion parts 243 and 244 are fixed in contact with each other to prevent the rotation movement of the handle frame 15.

To the contrary, if the eccentric member 261 is moved toward a front end portion of the hinge shaft 26, the fixing member 29 releases the locking state so that the first and second protrusion parts 243 and 244 are moved forth and separated from each other to allow the rotation movement of the handle frame 15.

Meanwhile, the hinge shaft 26 and the coupling part 24 to couple the coupling tube 23 to the handle frame 15 are inclined to one side, for example the bottom-left side of FIG. 1 at preset angle (α).

As described above, as the coupling tube 23 is coupled to the handle frame 15 slantly toward one side by the hinge shaft 27, the handle 12 and the handle frame 15 are rotated about the hinge shaft 27 and provided at one side of the front wheel frame part 20.

Therefore, according to the present invention, when folding the bicycle 10, the handle and the handle frame are rotated closely to one side of the front wheel frame part so that the volume of the bicycle 10 in the fixed state can be minimized.

The real wheel frame part 30 may include a rear wheel frame 31 constituting a rear end portion of the main frame of the bicycle 10 and a housing 32 coupled to the rear wheel frame 31 and having the driving module 14 and the rear wheel 13 mounted therein.

The rear wheel frame 31 may be manufactured in the form of a substantially quadrangular frame by using a pipe having a substantially quadrangular or cylindrical sectional surface corresponding to the front wheel frame 21.

The housing 32 may have an internal space in which a driving gear (not shown), a driven gear (not shown), and a chain (not shown) constituting the driving module 14 are mounted, and a pedal 16 and the rear wheel 13 may be mounted on a pedal shaft and a rear wheel shaft coupled to the driving gear and the driven gear, respectively.

Hereinafter, the structure of the hinge coupling part will be described in detail with reference to FIGS. 1, 4, and 5.

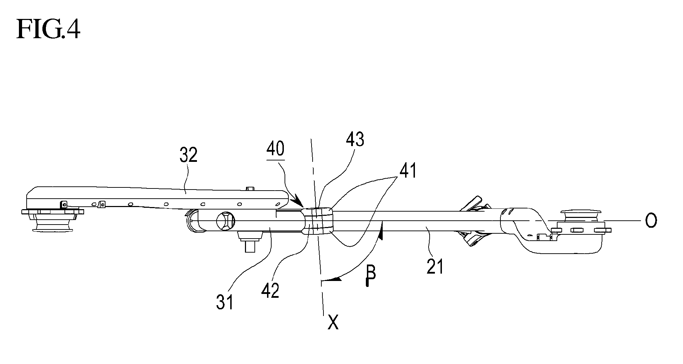

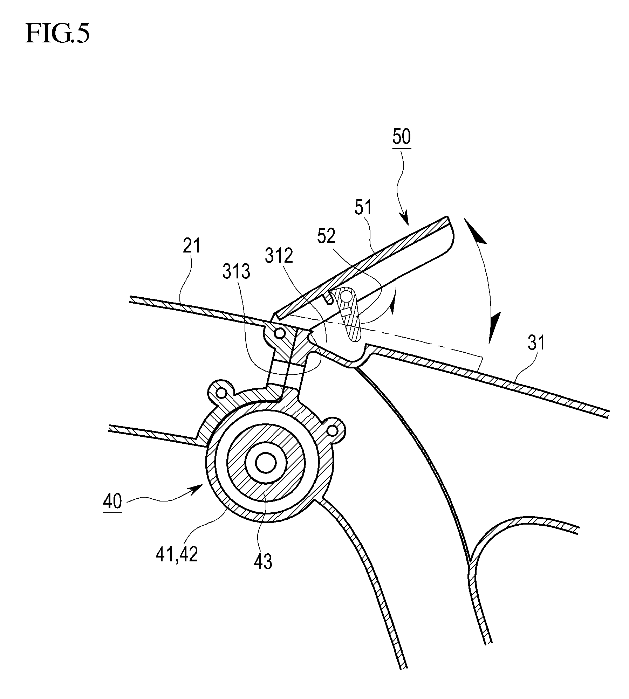

FIG. 4 is a bottom view showing the foldable bicycle shown in FIG. 1, and FIG. 5 is a sectional view showing the hinge coupling part shown in FIG. 4.

The hinge coupling part 40 may include a first flange 41 coupled to a rear end portion of the front wheel frame 21, a second flange 42 coupled to a front end portion of the rear wheel frame 31, and a rotational shaft 43 inclined to the one side at a preset angle β from the central line O of the front and rear wheel frames 21 and 31 and coupled to the first and second flanges 41 and 42 while passing through the first and second flanges 41 and 42.

As described above, according to the present invention, the rotational shaft is inclined to the one side at a preset angle from the front and rear wheel frames, so that the front wheel fork and the housing are folded as the front wheel fork and the housing are overlapped with each other by crossing each other.

Accordingly, the volume of the foldable bicycle 10 in the folded sate can be minimized.

For example, a pair of first flanges 41 may be provided, one second flange 42 may be provided, and a through hole may be formed in the central portion of the first and second flanges 41 and 42, so that the rotational shaft 43 can be coupled with the first and second flanges 41 and 42 while passing the through hole.

Each of the first and second flanges 41 and 42 is provided in a disc shape, and the second flange 42 is inserted between the paired first flanges 41 and overlapped with the first flanges 41.

In addition, according to the present invention the first and second flanges 41 and 42 may have various modifications, such as a semi-circular shape flange or an oval shape flange.

Further, according to the present invention, a pair of second flanges 42 may be provided, and one flange 41 may be provided. In addition, the first and second flanges 41 and 42 are provided in plural, so that the first and second flanges 41 and 42 may be alternately arranged.

Meanwhile, in order to prevent the stiffness of the main frame including the front wheel frame 21 and the rear wheel frame 31 from being degraded, at least one coupling protrusion 211 is formed on a rear end surface of the front wheel frame 21 and a coupling groove 311 may be formed in the rear wheel frame 31 corresponding to the coupling protrusion 211.

In addition, according to the present invention, the coupling groove 311 may be formed in the front wheel frame 21, and the coupling protrusion 211 may be formed on the rear wheel frame 31.

In addition, the foldable bicycle 10 according to an exemplary embodiment of the present invention may further include a locking part 50 to lock or release the rotation movement of the front and rear wheel frame parts 20 and 30 about the hinge coupling part 40.

For example, as shown in FIG. 4, the locking part 50 may include a locking lever 51 coupled to the rear end portion of the front wheel frame 21 so that the locking lever 51 can be hingedly rotated, and a locking member 52 mounted on a bottom surface of the locking lever 51 so that the locking member 52 is hingedly rotated, and inserted into an insertion groove 312 formed in a top surface of a front end portion of the rear wheel frame 31.

The locking lever 51 may have a substantially plate shape, and a front end portion of the locking lever 51 may be hinged with the front wheel frame 21 so that the locking lever 51 can be hingedly rotated.

The insertion groove 312 has a shape corresponding to that of the locking member 52, and a locking step 313 may be formed at a front upper end of the insertion groove 312 so that the front end portion of the locking member 52 is locked to the locking step 313.

In this case, a spring (not shown) is mounted between the locking member 52 and the locking lever 51, and the locking member 52 is provided in the central portion thereof with a mounting groove for the mounting of the spring.

Accordingly, in the state that the locking lever 51 closely makes contact with the front and rear wheel frames 21 and 31, the locking member 52 is moved along a bottom surface of the insertion groove 312, and hingedly rotated so that the locking member 51 is fixedly locked to the locking step 313.

Accordingly, the locking lever 51 performs a locking operation so that the front and rear wheel frames 21 and 31 are not rotated.

To the contrary, if the locking lever 51 is rotated up by external force, the locking member 52 is rotated by elasticity of the spring in the state that the locking member 52 is locked to the locking step 313.

Then, the locking state of the locking member 52 to the locking step 313 is released, and the locking state of the locking lever 51 is released so that the front and rear wheel frames 21 and 31 perform a rotation movement.

Meanwhile, fixing units (not shown) may be provided at surfaces of the front and rear wheels 21 and 31, which are overlapped with each other, respectively, to fix the front and rear wheels 21 and 31 when the front and rear wheels 21 and 31 are folded.

For example, the fixing units may include magnets (not shown), fixing hooks, and locking protrusions (not shown) provided on the surfaces of the front and rear wheels 21 and 31.

Hereinafter, the assembling relationship of the foldable bicycle 10 according to the exemplary embodiment of the present invention will be described in detail.

First, the rotational shaft 43 is coupled to the first and second flanges 41 and 42 provided at the front and rear wheel frames 21 and 31, respectively, and the coupling protrusion 211 is coupled to the coupling groove 311.

Then, the locking lever 51 mounted on the front wheel frame 21 is rotated to one side to perform a locking operation so that the front and rear wheel frames 21 and 31 are maintained in the coupled state.

The locking member 52 hinged with the locking lever 51 is moved along the bottom surface of the insertion groove 312, and hingedly rotated so that a front end portion of the locking member 52 is fixedly locked to the locking step 313.

The front and rear wheels 11 and 13 are mounted at rear end portions of the front wheel fork 22 and the housing 32, and the driving gear and the driven gear are mounted at a rear side of the rear wheel frame 31 and the housing 32. Then, a chain is mounted and the rear wheel frame 31 is coupled to a front end portion of the housing 32.

Thereafter, the handle frame 15 is rotatably coupled to the upper end portion of the coupling rod 221 coupled to the upper end portion of the front wheel fork 22.

In this case, the locking unit 25 is mounted in the coupling part 24 and maintained in a locked state when the coupling rod 221 is arranged in line with the handle frame 15.

Thereafter, the handle 12 is mounted on the handle frame 15, the pedal 16 is mounted on the pedal shaft provided in the housing 32, and a saddle is mounted on the rear wheel frame 31, thereby completing the assembling of the foldable bicycle 10.

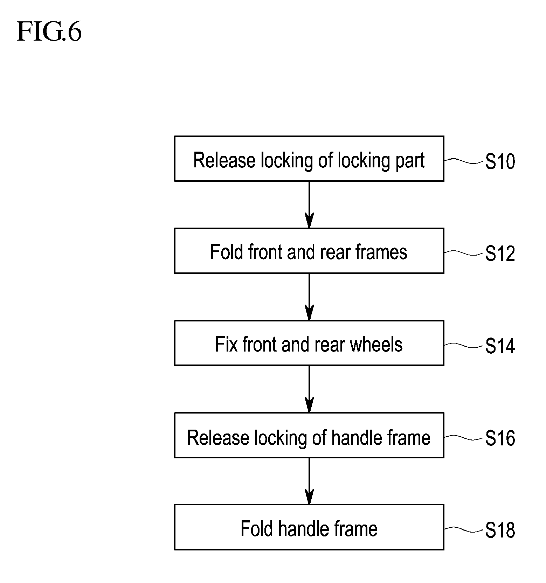

Hereinafter, a method of folding the foldable bicycle 10 according to an exemplary embodiment of the present invention will be described in detail with reference to FIGS. 6 to 8.

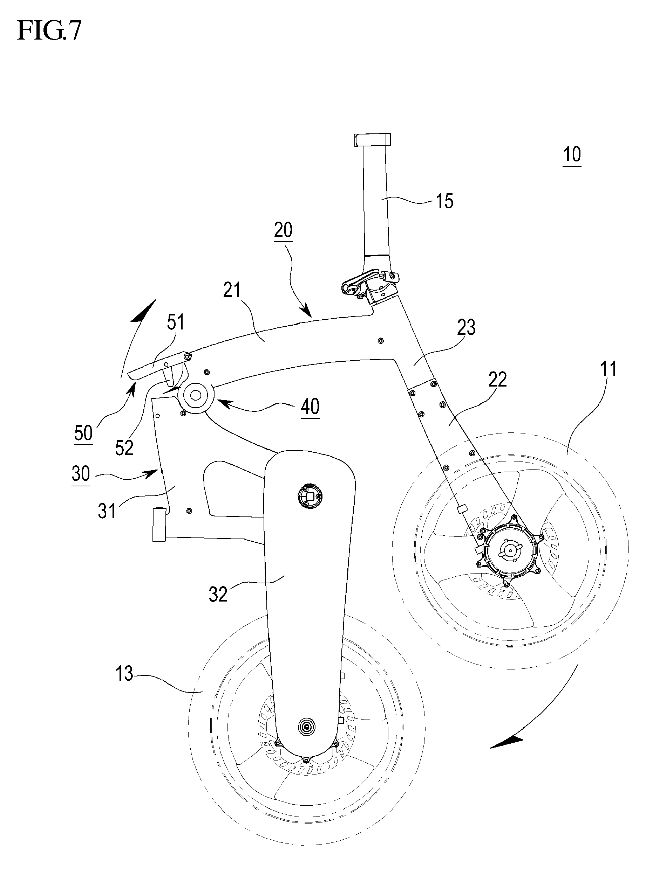

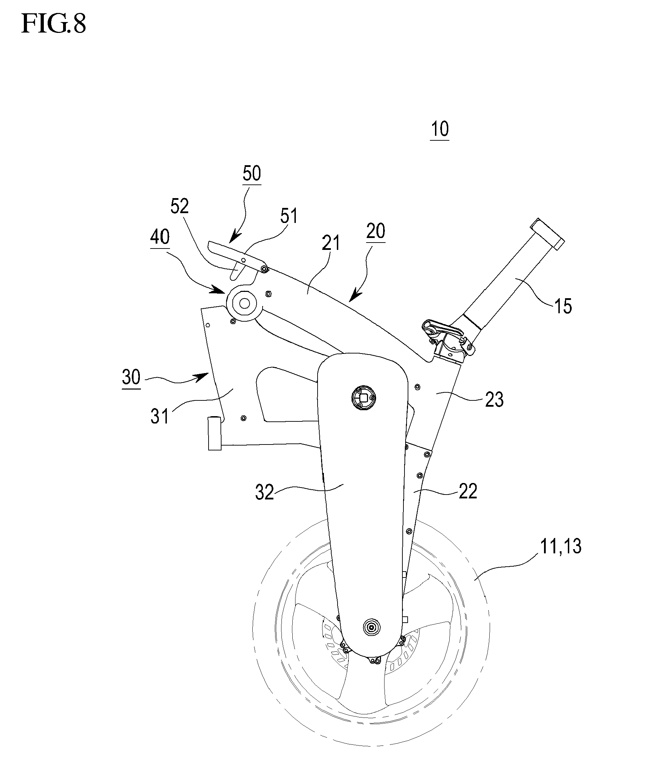

FIG. 6 is a flowchart showing the method of folding the foldable bicycle 10 according to an exemplary embodiment of the present invention. FIGS. 7 and 8 are views to explain the folding operation of the foldable bicycle 10.

In step S10 of FIG. 6, the locking lever 51 of the locking part 50 is rotated to release the locking state between the front and rear wheel frames 21 and 31.

At this time, the locking member 52 is hingedly rotated by the elasticity of the spring in the state that the locking member 52 is inserted into the insertion groove 313 of the rear wheel frame 31 and locked to the locking step 313 at the front end portion of the locking member 52.

Accordingly, the locking state between the locking member 52 and the locking step 313 is released, and the locking lever releases the locking state between the front and rear wheel frames 21 and 31 so that the front and rear wheel frames 21 and 31 can be rotated.

Therefore, as shown in FIGS. 7 and 8, the front and rear wheel frames 21 and 31 are rotated about the hinge coupling part 40 and folded (step S12).

In this case, the front and rear wheels 11 and 13 may be folded and fixed by magnets, fixing hooks, or locking protrusions serving as the fixing units (step S14).

As described above, according to the present invention, the front and rear wheel frames 21 and 31 of the foldable bicycle 10 can be folded by one operation of rotating the locking lever 51.

In this case, as the rotational shaft 43 is inclined to the one side at a preset angle β from the central line O of the front and rear wheel frames 21 and 31, the front wheel fork 22 and the housing are overlapped with each other by crossing each other.

Accordingly, the volume of the foldable bicycle 10 according to the present invention can be minimized in the folded state.

Therefore, a user can fold and easily carry the foldable bicycle 10 according to the present invention when pass stairs or a narrow space in the middle of using the foldable bicycle 10.

Meanwhile, in order to minimize the volume of the bicycle 10 when folding and storing the foldable bicycle 10, the user can fold the handle 12 and the handle frame 15 so that the whole volume of the bicycle 10 can be minimized.

In step S16, the locking state between the handle frame 15 and the locking unit 25 provided in the coupling rod 221 of the front wheel frame part 20 is released.

In detail, if the lever 27 of the locking unit 25 is rotated to one side, the coupling member 28 and the fixing member 29 coupled to the eccentric member 261 of the hinge shaft 26 are moved forward, and the first and second protrusion parts 243 and 244, which are fixed in the contact with each other by the fixing member 29, are separated from each other.

Accordingly, if the handle frame 15 is rotated about the hinge shaft 26, the handle frame 15 is folded to one side of the front wheel frame 21 (step S18).

Thereafter, the handle 12 is separated from the handle frame 15 or the saddle is separated from the rear wheel frame 31, so that the volume of the foldable bicycle 10 can be minimized.

Meanwhile, when the user uses the foldable bicycle 10 in the folded state again, the user spreads the foldable bicycle 10 so that the foldable bicycle 10 becomes in an original state for the use thereof by reversely sequentially performing steps S18 to Step 10.

As described above, according to the present invention, the foldable bicycle 10 can be folded by rotating up and down the front and rear wheel frames about the hinge coupling part, so that the volume of the foldable bicycle 10 can be minimized.

Although an exemplary embodiment of the present invention has been described for illustrative purposes, those skilled in the art will appreciate that various modifications, additions and substitutions are possible, without departing from the scope and spirit of the invention as disclosed in the accompanying claims.

The present invention is applicable to a foldable bicycle, which can be folded by rotating up and down the front and rear wheel frames about the hinge coupling part, so that the volume of the foldable bicycle can be minimized, and a method of folding the same.

## Claims

1. A foldable bicycle comprising:
a front wheel frame part in which a front wheel and a handle are mounted;
a rear wheel frame part in which a rear wheel and a driving module are mounted; and
a hinge coupling part to couple the front wheel frame part to the rear wheel frame part rotatably up and down the front wheel and the rear wheel such that the front and rear wheels are overlapped with each other by crossing each other,
wherein the front wheel frame part and the rear wheel frame part have equal or approximate lengths such that the hinge coupling part is provided at a central of the foldable bicycle or a whole frame.

2. The foldable bicycle of claim 1, wherein the hinge coupling part comprises:
a first flange coupled to a rear end portion of the front wheel frame part;
a second flange coupled to a front end portion of the rear wheel frame part; and
a rotational shaft inclined to one side at a preset angle from a central line of front and rear wheel frames, passing through the first and second flanges, and coupled to the first and second flanges, and
wherein the front and rear wheel frame parts are rotated about the rotational shaft in a folding operation such that the front and rear wheel frame parts are overlapped with each other by crossing each other.

3. The foldable bicycle of claim 1, further comprising a locking part to lock or release a rotation operation of the front and rear wheel frame parts about the hinge coupling part, wherein the locking part comprises:
a locking lever coupled to a rear end portion of the front wheel frame part such that the locking lever is hinge-rotated; and
a locking member mounted on a bottom surface of the locking lever such that the locking member is hinge-rotated, and inserted into an insertion groove formed in a front end portion of the rear wheel frame part.

4. The foldable bicycle of claim 1, wherein the front wheel frame part comprises:
a front wheel frame constituting a front end portion of a main frame of the foldable bicycle;
a front wheel fork in which a front wheel is mounted; and
a coupling tube to couple the front wheel fork to a front end portion of the front wheel frame, and
wherein the front wheel fork is mounted only at one side of the front wheel to prevent interference with the rear wheel frame part in a folding operation.

5. The foldable bicycle of claim 4, further comprising a coupling part rotatably hinged between an upper end portion of the coupling tube and a handle frame having an upper portion coupled to the handle such that the handle frame is folded when the foldable bicycle is folded,
wherein the coupling part comprises:
a first coupling flange provided at the upper end portion of the coupling tube; and
a second coupling flange provided at a lower end portion of the handle frame, and
wherein a locking unit is mounted in the coupling part to lock or release a folding operation of the handle frame,
the locking unit comprises a hinge shaft passing through the first and second coupling flanges of the coupling part and coupled to the first and second coupling flanges and a lever coupled to one end portion of the hinge shaft, and
the coupling part and the hinge shaft are inclined to one side at a preset angle such that the coupling part and the hinge shaft are inclined.

6. The foldable bicycle of claim 5, wherein the hinge shaft is provided at a central portion thereof with an eccentric member eccentrically mounted, and
wherein the locking unit further comprises:
a coupling member to reciprocate back and forth by the eccentric member; and
a fixing member coupled to a front end portion of the coupling member to fix first and second protrusion parts, which protrude from an upper end portion of a coupling rod mounted in the coupling tube and a lower end portion of the handle frame, respectively, in contact with each other, or to separate the first and second protrusion parts from each other.

7. The foldable bicycle of one of claims 2 to 6, wherein the rear wheel frame part comprises:
a rear wheel frame constituting a rear end portion of the main frame of the foldable bicycle; and
a housing coupled to a lower end portion of the rear wheel frame and having the driving module and the rear wheel mounted therein, and
wherein a coupling protrusion and a coupling groove coupled to the coupling protrusion are provided on a rear end surface of the front wheel frame part and a front end surface of the rear wheel frame part, respectively.

8. A method of folding a foldable bicycle, the method comprising:
(a) releasing a locking state of a locking part which locks rotation operations of front and rear wheel frame parts;
(b) rotating up and down the front and rear wheel frame parts about a hinge coupling part interposed between the front and rear wheel frame parts; and
(c) folding the front and rear wheel frame parts to be overlapped with each other by crossing each other.

9. The method of claim 8, wherein step (b) comprises rotating the front and rear wheel frame parts about a rotational shaft inclined at a preset angle from a central line of the front and rear wheel frame parts.

10. The method of claim 9, wherein step (c) comprises fixedly overlapping front and rear wheels with each other by a fixing unit.

11. The method of one of claims 8 to 10, further comprising:
(d) releasing a locking state of a handle frame coupled to the front wheel frame part; and
(e) folding the handle frame by rotating the handle frame to one side of a front wheel fork of the front wheel frame part.

12. The method of claim 11, wherein step (d) comprises releasing the locking state of the handle frame by separating first and second protrusion parts, which are formed on the front wheel frame part and the handle frame, from each other as a locking unit interposed between the front wheel frame part and the handle frame is rotated to one side.
